# EUROPÄISCHE PATENTSCHRIFT

(11) **EP 3 636 407 B1**
(45) Veröffentlichungstag und Bekanntmachung des Hinweises auf die Patenterteilung: **31.03.2021**
(21) Anmeldenummer: 18199720.6
(22) Anmeldetag: 10.10.2018
(51) Int. Cl.: B29C 45/14, B29C 45/33, F16H 19/06, F16G 13/20, B29L 31/26

(54) **DICHTUNGSPROFIL-AUFNAHMEVORRICHTUNG MIT EINER ERSTEN UND EINER ZWEITEN HALTEEINHEIT**
SEAL PROFILE HOLDER COMPRISING A FIRST AND A SECOND HOLDING UNIT
DISPOSITIF DE RÉCEPTION À PROFIL D'ÉTANCHÉITÉ DOTÉ D'UNE PREMIÈRE ET D'UNE SECONDE UNITÉ DE SUPPORT

(43) Veröffentlichungstag der Anmeldung: 15.04.2020
(73) Patentinhaber: Stefan Pfaff Werkzeug- und Formenbau GmbH & Co. KG, 88167 Röthenbach (DE)
(72) Erfinder: SUTTER, Anton, 88191 Weiler-Simmerberg (DE); BRAUN, Simon, 88167 Grünenbach (DE)
(74) Vertreter: Otten, Roth, Dobler & Partner mbB Patentanwälte

(56) Entgegenhaltungen:
- EP-A1- 1 642 696
- EP-A1- 3 210 735
- EP-A1- 3 210 746
- EP-B1- 3 093 115
- WO-A1-2017/075025
- WO-A1-2018/083068
- JP-A- S62 287 631
- US-A- 5 779 956

## Beschreibung

Die Erfindung betrifft eine Dichtungsprofil-Aufnahmevorrichtung mit wenigstens einer ersten Halteeinheit zum Aufnehmen und Halten eines ersten Dichtungsprofilelementes und mit einer zweiten Halteeinheit zum Aufnehmen und Halten eines zweiten Dichtungsprofilelementes sowie mit wenigstens einer Gießeinheit zum Gießen von wenigstens einem Verbindungsabschnitt zum Verbinden des ersten Dichtungsprofilelementes mit dem zweiten Dichtungsprofilelement und/oder zum Gießen von einem ersten Endabschluss des ersten Dichtungsprofilelementes und einem zweiten Endabschluss des zweiten Dichtungsprofilelementes nach dem Oberbegriff des Anspruchs 1.

### Stand der Technik

Es ist bereits bekannt, Dichtungsprofile, zum Beispiel für Fahrzeugtüren zu fertigen, indem einzelne Profilteile an ein erstes Profil, ein sogenanntes zentrales Profil, angespritzt werden (z.B. EP 3 093 115 B1, EP 3 056 311 B1). Um einen solchen Anspritzvorgang durchzuführen, wird entweder das zentrale Profil in eine erste Form und das anzuspritzende, zweite Profil wird ebenfalls in einem Bereich der Form eingebracht.

Auch separate Anspritzvorgänge, mit denen kein Profil angefügt wird, sondern lediglich das Ende eines Profils mit einem Kunststoffabschluss versehen wird, können durchgeführt werden. Hierbei werden üblicherweise in der Serienfertigung mindestens zwei, jedoch auch mehrere Profile gleichzeitig bearbeitet, d.h. es werden mit einem gemeinsamen Anspritzvorgang bzw. in einer gemeinsamen Aufnahmevorrichtung an vier Profile entsprechende Enden bzw. Abschlüsse angegossen.

Üblicherweise sind derartige Profile bzw. Profilteile vergleichsweise lang sowie dünn und bestehen im Wesentlichen aus elastischem, weichem Material mit hohem Reibkoeffizienten wie thermoplastischem Elastomer (TPE) oder Kautschuke bzw. Gummis, z.B. EPDM, TPO, TPU, PP, PPE, PIB, PS, PETP, POM, TPU oder dergleichen. Deshalb müssen diese Profile in die Aufnahmevorrichtungen bzw. Halterungen/Formen mit großem Spiel bzw. Luft eingebracht werden und zum Gießen müssen die Formen bzw. Halterungen sehr dicht anliegen bzw. eingeklemmt werden und mit großem Spiel bzw. Luft wieder ausgenommen werden. So sind die Halterungen meist zumindest zweiteilig ausgebildet, wobei mindestens eine Komponente bzw. ein Element relativ zum anderen verstellbar ist. Auch müssen die fertigen Profile vielfach aus der Form/Halterung geworfen werden, um sie zu entnehmen, so dass nachfolgend ein neues Profil mit der Aufnahmevorrichtung gefertigt werden kann.

Für diese Verstellbewegungen der entsprechenden Komponenten bzw. Elemente sind diverse Antriebe notwendig. Aufgrund der Komplexität der Aufnahmevorrichtungen und der zum Teil nichtlinearen bzw. kurvenbahnförmigen Verstellbewegungen sowie aufgrund der unterschiedlichen Verstellwege/Längen, Verstellrichtungen, Verstellkräfte etc. werden unterschiedlichste Antriebe eingesetzt, die üblicherweise für jede Fahrzeugtürdichtung individuell gestaltet werden. Neben automatisierten Antrieben wie Hubkolbenzylinder, Zahnstangenantrieben werden auch manuelle Antriebe eingesetzt, wie z.B. Dreh-/Schenkmechanismen oder Kurvenbahnen, die mittels Handgriffen von Bedienpersonen betätigt werden.

Die Komplexität der Aufnahmevorrichtungen bedingt zudem, dass u.a. die Anordnung bzw. die Verwendung der Antriebe unter großem Platzmangel leidet. So sind oftmals Umlenkungen bzw. Richtungsänderungen zwischen sog. Antrieb und sog. Abtrieb von 90°, 135° etc. notwendig, um an das zu verstellende Element/Formteil zu gelangen. Auch müssen Sicherheitsvorschriften für den freien, sicheren Zugang bzw. für die manuelle Betätigung der Bedienperson beachtet werden.

Bei der Verarbeitung von thermoplastischen Kunststoffen und Elastomeren sind Arbeitstemperaturen von bis zu ca. 200°C üblich, so dass die Aufnahmevorrichtung bzw. entsprechende Komponenten zum Teil beheizt und/oder gekühlt werden müssen. Demzufolge werden hohe thermische Anforderungen gerade auch an die Antriebe bzw. verstellbaren Komponenten gestellt.

So müssen diese Antriebe bzw. verstellbaren Komponenten nicht nur den hohen Temperaturen über unzählige Fertigungszyklen standhalten, sondern müssen zudem Platz sparend ausgebildet sein und sehr flexibel angeordnet werden können, um nicht anderen Komponenten wie den Halterungen bzw. Gussformen oder der Bedienperson bzw. dem Einbringen und dem Herausnehmen der Profile im Weg zu stehen.

Deshalb werden bislang nicht nur die Aufnahmevorrichtungen, sondern auch die Antriebe nahezu individuell für die jeweilige Verstellung angepasst, was ein großer konstruktiver als auch wirtschaftlicher Aufwand bedeutet.

### Aufgabe und Vorteile der Erfindung

Aufgabe der Erfindung ist es demgegenüber, eine Dichtungsprofil-Aufnahmevorrichtung der eingangs genannten Art vorzuschlagen, die hohe Anforderungen erfüllt und zudem wirtschaftlich günstig realisierbar ist.

Diese Aufgabe wird, ausgehend von einer Dichtungsprofil-Aufnahmevorrichtung der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Dichtungsprofil-Aufnahmevorrichtung dadurch aus, dass die erste und/oder zweite und/oder dritte Antriebseinheit wenigstens eine mehrere Kettenglieder umfassende Kette aufweist, wobei die Kette und/oder Kettenglieder wenigstens zwischen zwei Führungsflächen einer Führungseinheit zum Führen der Kette und/oder Kettenglieder angeordnet ist, so dass mit dem Kettenantrieb sowohl in Zugrichtung als auch in Druckrichtung der Kette eine Verstellkraft realisierbar ist.

Mit Hilfe dieser Maßnahme wird erreicht, dass der bzw. die Antriebe sehr flexibel an unterschiedlichste Anforderungen und Platzangebote angepasst werden kann, da die Führung bzw. die Führungsflächen, an denen die verstellbaren Ketten/Kettenglieder entlang geführt werden, ohne großen Aufwand in unterschiedlichsten Gestaltungen/Formen ausgebildet/hergestellt werden können. Mit der erfindungsgemäßen geführten Kette können sowohl Zugkräfte als auch Druckkräfte auf das zu verstellende Elemente erzeugt werden, so dass diese vorteilhaft in zwei entgegengesetzte Richtungen mit Kraft beaufschlagt werden können. Dies ermöglicht ein vorteilhaftes Öffnen und Schließen der Halteeinheiten und/oder Auswerfer etc. in besonders kompakter Bauweise.

Gemäß der Erfindung können die kompakt ausgebildeten Antriebe bzw. Antriebseinheiten für die individuellen Dichtungsprofil-Aufnahmevorrichtungen standardisiert werden, obwohl die Antriebe an die unterschiedlichsten Rahmenbedingungen angepasst werden müssen, wie Platzangebot, wenige Positionierungsmöglichkeiten versus Freihalteräume für die Bedienperson etc., Ausrichtung zum zu verstellenden Element, Länge der Verstellwege, unterschiedliche Verstellwege bzw. -abschnitte wie z.B. Dreh- und/oder Schwenkbewegung und/oder Kurvenbahn und/oder Linearbewegung. Für all diese unterschiedlichen Rahmenbedingungen, insb. unterschiedliche Verstellwege, mussten bislang unterschiedliche Antriebe entwickelt werden. Dies führte zu hohen Entwicklungs- und Herstellungskosten entsprechend individueller Dichtungsprofil-Aufnahmevorrichtungen. Eine Standardisierung des Antriebs bzw. der wesentlichen Komponenten der Antriebseinheiten gemäß der Erfindung für Dichtungsprofil-Aufnahmevorrichtungen wirkt sich wirtschaftlich besonders positiv aus.

Vorzugsweise wird eine Linearbewegung des verstellbaren Halteelementes und/oder des Auswerfers realisiert. Es können jedoch z.B. auch Dreh- und/oder Schwenkbewegungen, Kurvenbahnverstellungen des verstellbaren Halteelementes und/oder des Auswerfers in vorteilhafter Weise verwirklicht werden.

Darüber hinaus kann auch aufgrund der hohen Flexibilität des Antriebs bzw. der Antriebseinheiten gemäß der Erfindung auch ein im Vergleich zum bisherigen Stand der Technik zunehmende Automatisierung der Dichtungsprofil-Aufnahmevorrichtungen verwirklicht werden. Beispielsweise können erfindungsgemäße Antriebe bzw. Antriebseinheiten auch anstelle von bislang üblichen manuellen Antrieben bzw. Handgriffen eingesetzt werden. Hierdurch kann eine körperliche Entlastung der Bedienperson erreicht werden, was die derzeit immer noch notwendige gewisse manuelle Bedienung bzw. die Person über einen gesamten Arbeitstag betrachtet mit teilweise hunderten von zu fertigenden Dichtungsprofilen produktiver macht. Zudem wird meistens eine schnellere und kontrolliertere sowie fehlerärmere Fertigung erreicht, zumindest für die Verstellungen bzw. Arbeitsschritte, bei denen keine Zwischenschritte und/oder komplexe Kurvenbahnen zu realisieren sind. Eine zunehmende Automatisierung gewährleistet auch eine deutliche Reduktion der Verletzungsgefahr für die Bedienperson, d.h. weniger manuelle Handgriffe bzw. -eingriffe verringert das Risiko, dass die Person Finger bzw. Hände einklemmt bzw. einquetscht und sich erhebliche Verletzungen zuziehen könnte.

Vorteilhafterweise umfasst die erste und/oder zweite und/oder dritte Antriebseinheit wenigstens einen Linearantrieb zum linearen Verstellen eines ersten Antriebselementes. Beispielsweise kann der Linearantrieb als Linearmotor oder das erste Antriebselement des Linearantriebes als Zahnstange oder Gewindestange ausgebildet werden. Vorzugsweise ist der Linearantrieb als Hub-Kolben-Zylindereinheit ausgebildet, wobei das erste Antriebselement als verstellbarer Kolben ausgebildet ist.

In einer besonderen Weiterbildung der Erfindung sind die Kette und/oder Kettenglieder zwischen dem ersten Antriebselement und einem zweiten Antriebselement angeordnet. Hierbei kann das zweite Antriebselement in vorteilhafter Weise eine Linearbewegung realisieren. Es können jedoch z.B. auch Dreh- und/oder Schwenkbewegungen, Rotationen, (bogen-/wellenförmige) Kurvenbahnverstellungen des zweiten Antriebselementes bzw. des sog. Abtreibelementes verwirklicht werden.

In einer vorteilhaften Variante der Erfindung ist das erste Antriebselement in eine erste Verstellrichtung und das zweite Antriebselement in eine zweite Verstellrichtung verstellbar, wobei die erste Verstellrichtung winklig, insbesondere senkrecht, zur zweiten Verstellrichtung ausgerichtet ist. Hiermit kann eine vorteilhafte Umlenkung bzw. Richtungsänderung zwischen erstem Antriebselement und zweitem Antriebselement verwirklicht werden. So kann zum Beispiel eine nahezu beliebige Umlenkung von z.B. ca. 30°, 45°, 90°, 110°, 135° oder 160° etc. realisiert werden. Das bedeutet, dass eine nahezu freie bzw. beliebige Winkelwahl verwirklicht werden kann, so dass eine vorteilhafte Anpassung bzw. Flexibilität an die beengten und/oder vorgegebenen geometrischen Verhältnisse der Aufnahmevorrichtung erreicht werden kann.

Eine entsprechende Winkelanpassung kann lediglich dadurch erreicht werden, dass die Führungseinheit entsprechend ausgebildet wird, d.h. entsprechend den von anderen Komponenten vorgegebenen Raum-/Platzverhältnissen. Kette/Kettenglieder, erstes und zweites Antriebselement sowie Antriebsvorrichtung wie Hub-Kolben-Zylindereinheit oder dergleichen brauchen gemäß der Erfindung nicht oder nur minimal angepasst/verändert werden, z.B. unterschiedlich lange Ketten durch unterschiedliche Anzahl der (standardisierten) Kettenglieder. Demzufolge kann der Hersteller von Dichtungsprofil-Aufnahmevorrichtungen bzgl. dieser wesentlichen Komponenten der Antriebseinheit gemäß der Erfindung vergleichsweise große Stückzahlen verwirklichen, was den Aufwand für Entwicklung und Konstruktion und somit gerade auch den wirtschaftlichen Aufwand erheblich reduziert.

Vorzugsweise umfasst die Führungseinheit wenigstens eine Führungsnut und/oder Führungsausnehmung. Beispielsweise umfasst ein Führungselement die Führungsnut und/oder Führungsausnehmung, wobei in vorteilhafter Weise ein Abdeckelement/-platte oder dergleichen vorgesehen ist. Hiermit kann eine vorteilhafte geschlossene Führung der Kette bzw. Kettenglieder verwirklicht werden. Dies ist positiv bzgl. der Betriebssicherheit und der exakten Führung.

Eine Anpassung bzw. Veränderung der Ausrichtung des Antriebes bzw. der zweiten Verstellrichtung des zweiten Antriebselementes kann hierbei lediglich durch entsprechend geänderter Form der Führungsnut und/oder Führungsausnehmung umgesetzt werden, wobei insbesondere ein Gehäuse und/oder eine äußere Form und/oder weitere Elemente der Führungseinheit nahezu unverändert bleiben können. Beispielsweise kann die Führungsnut und/oder Führungsausnehmung vorteilhafterweise mittels Span abhebender Fertigungsverfahren wie Fräsen oder dergleichen generiert werden. Dies ist kostengünstig und z.B. mit modernen CNC-Werkzeugmaschinen ohne großen Aufwand und in beliebiger Form umsetzbar.

Vorteilhafterweise umfasst die Führungseinheit wenigstens einen gebogenen und/oder runden Führungsabschnitt zum Umlenken der Kette und/oder Kettenglieder. Hiermit ist die Umlenkung bzw. Richtungsänderung zwischen erstem Antriebselement und zweitem Antriebselement in vorteilhafter Weise umsetzbar.

Alternativ oder in Kombination hierzu kann die Führungseinheit wenigstens ein um eine Drehachse drehbares Umlenkrad zum Umlenken der Kette und/oder Kettenglieder umfassen. Hiermit kann eine vorteilhafte Führung der Kette bzw. Kettenglieder in der Führungseinheit verwirklicht werden. Auch kann eine vorteilhafte Drehbewegung bzw. Rotation des zweiten Antriebselementes verwirklicht werden. Das bedeutet, dass z.B. ein Linearantrieb bzw. eine Linearverstellung des ersten Antriebselementes mittels der Kette bzw. Kettenglieder gemäß der Erfindung in eine Rotation des zweiten Antriebselementes in vorteilhafter Weise transformierbar ist.

Vorteilhafterweise sind am ersten Antriebselement des Linearantriebs wenigstens zwei Ketten fixiert, so dass beim Verstellen des ersten Antriebselements zugleich die wenigstens zwei Ketten verstellt werden. Hiermit wird erreicht, dass ein einziger bzw. gemeinsamer Antrieb für z.B. zwei oder vier verschiedene, verstellbare Elemente wie Halteelemente, Auswerfer oder dergleichen verwendbar ist. Diese Doppelnutzung eines Antriebs wie eines pneumatischen oder hydraulischen Hub-Kolben-Zylinder-Antriebs reduziert den konstruktiven Aufwand und zudem den Platzbedarf. Dies ist gerade bei den komplexen Dichtungsprofil-Aufnahmevorrichtungen von entscheidendem Vorteil.

Vorzugsweise weisen die Kette und/oder Kettenglieder wenigstens Laufflächen umfassende Laufrollen auf, wobei die Laufflächen der Laufrollen an den Führungsflächen der Führungseinheit angeordnet sind. Dies verbessert die Laufeigenschaften der Kette in der Führungseinheit und reduziert den Abrieb bzw. den Verschleiß.

In einer vorteilhaften Variante der Erfindung sind die Laufflächen der Laufrollen und/oder die Führungsflächen der Führungseinheit gehärtet. Dies verbessert nochmals die Lebensdauer und Wartungsfreundlichkeit der Führung, da eine Schmierung mit (herkömmlichen) Ölen bzw. Fetten durch die zum Teil hohen Temperaturen von ca. 200°C sehr eingeschränkt ist.

Aufgrund der zum Teil sehr heißen Arbeitstemperaturen sind Teile der Antriebseinheiten bzw. die Antriebskomponenten wie z.B. die Hub-Kolben-Zylinderantriebe oder dergleichen gegenüber den ca. 200°C heißen Gussformen bzw. Komponenten der Aufnahmevorrichtung gemäß der Erfindung thermisch isoliert und/oder abgeschirmt. Beispielsweise sind in vorteilhafter Weise thermische Isolierelemente/-schichten zwischen Halteinheit und Antriebseinheit und/oder von Teilen der Antriebseinheit vorgesehen. Dagegen kann die Führungsvorrichtung und/oder die Kette und/oder Kettenglieder gemäß der Erfindung durchaus im heißeren Bereich der Aufnahmevorrichtung angeordnet werden.

Gerade Metallketten können durchaus auch Temperaturen von ca. 200°C vertragen, insbesondere mit den vorteilhaften Laufrollen kann eine relativ lange Lebensdauer erreicht werden, selbst ohne herkömmliche oder mit minimaler bzw. spezieller Schmierung.

Die Kette und/oder Führungseinheit gemäß der Erfindung kann als vorteilhafte Abstandseinheit und/oder thermische Isolationsvorrichtung zwischen zu verstellendem Element/Auswerfer bzw. dem heißen Arbeitsbereich und der Antriebskomponente wie Hubkolben etc. bzw. einem nicht-heißen bzw. relativ kalten, insb. gekühlten Bereich der Aufnahmevorrichtung gemäß der Erfindung ausgebildet/eingesetzt werden.

Eine Breite und/oder Höhe der Führung bzw. der Führungsnut und/oder Führungsausnehmung hat eine vergleichbare Größe wie eine Breite und/oder Höhe der Kette und/oder Kettenglieder und/oder Laufrollen. Hiermit wird die Führung weiter verbessert bzw. stabilisiert.

Vorzugsweise sind zwei Laufrollen quer zur Laufrichtung der Kette vorgesehen. Dies gewährleistet eine besonders stabile bzw. kontrollierte Führung der Kette in der Führungseinheit bzw. der Führungsnut und/oder Führungsausnehmung. Vorteilhafterweise ist wenigstens eine Lasche, insb. zwei Laschen eines Kettengliedes zwischen zwei Laufrollen der Kette angeordnet. Diese Maßnahmen unterbinden ein seitliches Kippen der Kette/Kettenglieder oder dergleichen wirkungsvoll.

Vorteilhafterweise dient die erfindungsgemäße Aufnahmevorrichtung vor allem zur Aufnahme eines ersten bzw. zentralen Dichtungsprofils insbesondere für Fahrzeugtüren oder dergleichen, wobei an das erste Profil in vorteilhafter Weise wenigstens ein weiteres Profil anzuspritzen ist. Die Aufnahmevorrichtung wird dazu in einer entsprechenden Spritzmaschine eingebaut bzw. angeordnet. Hierzu umfasst die erfindungsgemäße Aufnahmevorrichtung wenigstens eine Gussform mit vorzugsweise wenigstens zwei Formteilen bzw. Formelementen, um das erste Profil in der Form bzw. in den zwei Formteilen bzw. Formelementen zumindest abschnittsweise wenigstens während einer Gießphase und/oder einer Aushärtungs- bzw. Auskühlphase zu halten/fixieren und/oder einzuklemmen.

Jede der Halteeinheiten gemäß der Erfindung umfasst in vorteilhafter Weise je eine (insb. mindestens zweiteilige) Gussform, die das Profil an mehreren Seiten/Flächen, insbesondere an fünf Seiten/Flächen vollständig umschließt und in der der Anspritzvorgang durchgeführt wird. Die Form kann als Ganzes in eine Spritzmaschine eingebaut werden. Sie kann auch aus einzelnen Formteilen zusammengesetzt sein.

Bei einer vorteilhaften Variante der erfindungsgemäßen Aufnahmevorrichtung sind die wenigstens zwei Halteeinheiten über eine Verbindungsvorrichtung miteinander verbunden, wobei die Verbindungsvorrichtung jeweils zwei der wenigstens zwei Formteile/-elemente miteinander verbindet. Grundsätzlich können beliebig viele Verbindungsvorrichtungen vorgesehen sein. Die Verbindungsvorrichtung dient zusätzlich zur Ausrichtung des ersten Profils, das heißt, das erste Profil kann an der Verbindungsvorrichtung anliegen und somit positioniert (zum Beispiel gerade gerichtet) werden. In vorteilhafter Weise kann das ersten Profil auf diese Weise über seine gesamte Länge oder zumindest über annähernd die gesamte Länge formstabil gehaltert werden. Die Formen wiederum besitzen eine Aufnahmeöffnung zur Aufnahme und Halterung des Profils. Zur Einbringung des Profils kann die Form auf das Profil oder umgekehrt das Profil (manuell) in die Gussform und/oder Halteeinheit eingelegt bzw. geschoben werden.

Die erfindungsgemäße Aufnahmevorrichtung ist entsprechend dazu ausgebildet, das/die Dichtungsprofile in wenigstens einer der Gussformen wenigstens teilweise versenkbar aufzunehmen.

In der Gussform kann zum Beispiel ein weiteres Profil angespritzt werden. Auch eine weitere Gussform kann gegebenenfalls zusätzlich verwendet werden. So ist es in vorteilhafter Weise möglich, wenigstens zwei, insb. mehrere Anspritzvorgänge parallel, d.h. zeitgleich, durchzuführen. Dies gilt insbesondere für Anspritzvorgänge, bei denen nicht nur eine Endbearbeitung erfolgt bzw. ein Abschlussende angespritzt wird, sondern bei denen zwei Profile über einen Anspritzvorgang miteinander verbunden werden.

Bei einer Endbearbeitung wird in der Regel lediglich der Kunststoff auf das Profil aufgebracht, jedoch kein weiteres Profil mit dem zentralen Profil verbunden. So ist es bei einer Ausführungsvariante der Erfindung möglich, z.B. ein Ende eines Profils mit einem angespritzten Abschluss zu versehen, d.h. sog. Endanspritzung, ohne dabei ein weiteres Profil daran anzubringen. Ferner können sogenannte Positionierpins angespritzt werden, die als Referenzmarken zur Positionierung dienen können. Diese Variante ist daher besonders flexibel verwendbar.
Hier werden meist vier oder mehr Profile bzw. Anspritzvorgänge parallel, d.h. zeitgleich, durchgeführt.

Es ist denkbar, die Aufnahmevorrichtung gemäß der Erfindung in einer einzigen Spritzmaschine einzuspannen und dort die Bearbeitungsvorgänge/Anspritzvorgänge durchzuführen. Je nach Art des zu bearbeitenden Profils kann es jedoch vorteilhaft sein, die Aufnahmevorrichtung für verschiedene Anspritzvorgänge in unterschiedlichen Spritzmaschinen einzuspannen. Die Spritzmaschinen können dabei in einer festen Position zueinander angeordnet werden. Je nach zu bearbeitendem Profil kann es andernfalls zu Platzproblemen führen, wenn die entsprechenden Spritzaggregate in Bezug auf das Profil positioniert werden.

Darüber hinaus kann es auch vorteilhaft sein, verschiedene Spritzaggregate zu verwenden, wenn verschiedene Kunststoffe eingespritzt werden. Grundsätzlich ist es aber auch denkbar, die erfindungsgemäße Aufnahmevorrichtung in einer einzigen Spritzmaschine einzubinden und dort den bzw. die verschiedenen Anspritzvorgänge durchzuführen. In vorteilhafter Weise ermöglicht es die Erfindung, ein gleichzeitiges Anspritzen unterschiedlicher Spritzguss-Elemente/-Komponenten vorzunehmen, insbesondere auch von Spritzguss-Elemente/-Komponenten, die sich hinsichtlich ihrer Bearbeitungsparameter und ihrer Verarbeitungszeit unterscheiden.

Unter einem Spritzguss-Element/-Komponente wird vorliegend der anzuspritzende Kunststoff, zum Beispiel ein thermoplastisches Elastomer oder EPDM etc. verstanden. Ferner ermöglicht die Erfindung, dass in einer Form gleichzeitig zwei unterschiedliche Spritzguss-Elemente/-Komponenten an das Profil angespritzt werden, in der Regel an unterschiedlichen Stellen des Profils.

### Ausführungsbeispiel

Ein bevorzugtes Ausführungsbeispiel der Erfindung ist in der Zeichnung dargestellt und wird anhand der Figuren nachfolgend näher erläutert.

Im Einzelnen zeigt:
- Figur 1: eine schematische, teilweise geschnittene Draufsicht auf eine Hälfte einer ersten Aufnahmevorrichtung mit drei Antriebseinheiten gemäß der Erfindung,
- Figur 2: eine der drei Antriebseinheiten gemäß Figur 1 in einer schematischen, perspektivischen Ansicht,
- Figur 3: schematisch eine freigelegte Kette der Antriebseinheit gemäß Figur 2,
- Figur 4: ein schematischer Schnitt durch die Kette der Antriebseinheit gemäß Figur 2,
- Figur 5: eine schematische Variante einer Antriebseinheit gemäß der Erfindung mit einer gemeinsamen, ersten Antriebsstange mit zwei separaten Ketten gemäß der Erfindung,
- Figur 6: eine schematische, teilweise geschnittene Draufsicht auf eine zweite Aufnahmevorrichtung mit einer weiteren Antriebseinheit gemäß der Erfindung, die eine gemeinsame, zweite Antriebsstange sowie zwei synchrone Ketten gemäß der Erfindung und zwei synchrone Schieber umfasst,
- Figur 7: eine schematische Ansicht eine weiteren Antriebseinheit gemäß der Erfindung mit einem zu umgehenden Hindernis und
- Figur 8: eine schematische Ansicht einer weiteren Antriebseinheit gemäß der Erfindung mit einem zu verstellenden, drehbaren Abtriebsrad.

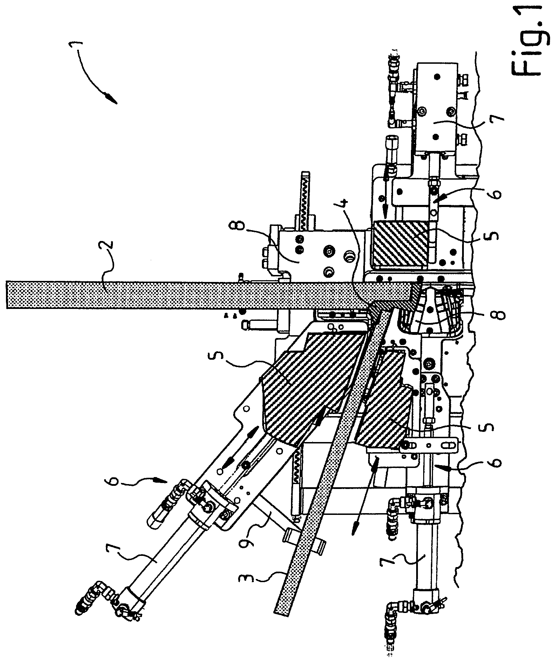

In Figur 1 ist eine Dichtungsprofil-Aufnahmevorrichtung 1 gemäß der Erfindung schematisch dargestellt. Hiermit werden zwei Profile 2, 3 mittels einer Verbindung 4 z.B. für eine Fahrzeugtürdichtung miteinander verbunden. Ohne nähere Darstellung ist hierfür eine Kunststoff-Spritzgießeinheit vorgesehen, die die Verbindung 4 im Spritzgussverfahren einbringt.

Gemäß der Erfindung werden die biegeschlafen, elastischen Profile 2, 3 unter anderem jeweils mittels längs eines Verstellweges (Pfeile bzw. Doppelpfeile) verstellbaren Haltern bzw. Klemmbacken 5 sowie unverstellbaren Gegenhaltern bzw. Klemmbacken 8 sowie bei Bedarf zusätzlich mit einer Stütze 9 oder dergleichen positioniert und gehalten. Die Klemmbacken 5, 8 sind derart ausgebildet, dass diese für das Einlegen/Einbringend er Profile 2, 3 ein sehr großes Spiel bzw. große Weite aufweisen und für den Gießprozess sehr eng an das Profil 2, 3 anliegen bzw. verfahren werden, so dass der flüssige bzw. fließfähige Kunststoff für die Verbindung 4 beim Einspritzvorgang korrekt ausgeformt wird. So bilden jeweils ein Teil bzw. Randbereich der Klemmbacken 5, 8 sowie ggf. weitere zum Teil nicht näher dargestellte Guss-Formelemente eine (geschlossene) Gussform für den Gießprozess.

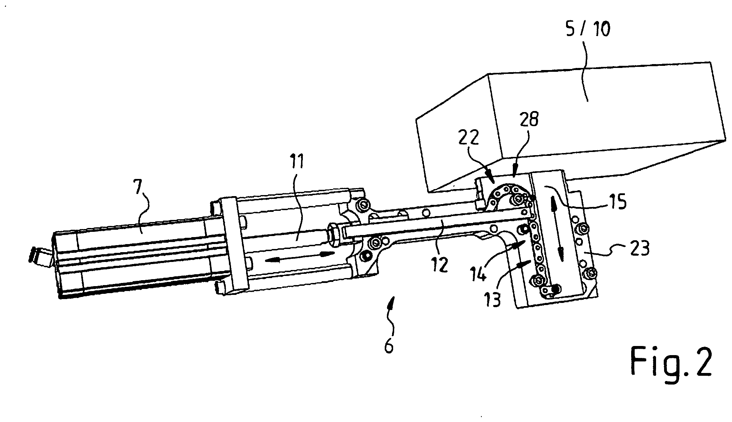

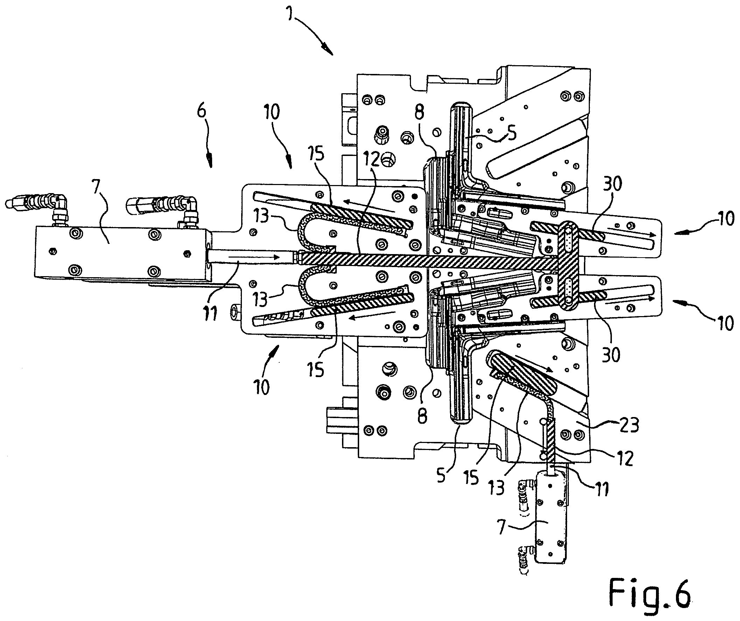

Nach dem Aushärten bzw. Auskühlen der Verbindung 4 werden die verstellbaren Klemmbacken 5 wieder zurückgezogen, so dass wieder ein großes Spiel bzw. eine große Weite entsteht. Ohne nähere Darstellung in Figur 1 sind, wie bei der Variante bzw. der Ansicht gemäß den Figuren 2 und 6 schematisch dargestellt, vielfach auch Auswerfer 10 vorgesehen, die in einer quer zur Blattebene gerichteten Verstellung die gefertigte bzw. verbundene Profileinheit/Fahrzeugdichtung anhebt bzw. auswirft.

Da für Fahrzeuge wie Autos, Lastkraftwagen etc. üblicherweise eine "linke" und eine "rechte" Fahrzeugdichtung benötigen, sind die Dichtungsprofil-Aufnahmevorrichtung 1 nicht nur individuell auf das Fahrzeug "zugeschnitten" bzw. ausgebildet, sondern meist auch derart ausgebildet, dass diese zugleich die Profile 2, 3 für beide Fahrzeugdichtungen aufnehmen können. So ist aus Gründen der Übersichtlichkeit in Figur 1 lediglich eine Hälfte einer Dichtungsprofil-Aufnahmevorrichtung 1 dargestellt.

Aus Figur 1 wird jedoch bereits deutlich, dass gerade auch wenn beide Hälften der Dichtungsprofil-Aufnahmevorrichtung 1 berücksichtigt/vorhanden sind, einerseits für eine Bedienperson nur wenig Platz vorhanden ist, die einzelnen, unverbundenen Profile 2, 3 einzulegen/einzubringen und die Klemmvorgänge zu starten/veranlassen und die (beiden) Fahrzeugdichtungen aus der Dichtungsprofil-Aufnahmevorrichtung 1 wieder zu entnehmen. Zugleich sind strenge Sicherheitsbestimmungen zu beachten, da ein erhebliches Verletzungsrisiko von den Verstellvorgängen für die Hände bzw. Finger der Bedienperson ausgeht. Dementsprechend muss eine gute Zugänglichkeit für die Bedienperson vorhanden sein, was wiederum die Anordnung der Komponenten der Dichtungsprofil-Aufnahmevorrichtung 1 und somit das Platzangebot sowie die Positionierfreiheiten für diese entsprechend einschränkt.

Andererseits ist auch sehr wenig Platz bereits durch die große Komplexität bzw. Vielzahl der Komponenten der Dichtungsprofil-Aufnahmevorrichtung 1 im zentralen Bereich der zu gießenden Verbindung 4 vorhanden, wie u.a. die Antriebskomponenten der verstellbaren Klemmbacken 5 und Auswerfer 10 (vgl. insb. Figur 6) sowie die nicht näher dargestellten Spritzgusskomponenten, Heiz- und/oder Kühlkanäle, Versorgungsleitungen und so weiter. Da jedoch die Gussformen bzw. Profilhalter von zentraler Bedeutung sind und nicht veränderbar bzw. nicht anders positionierbar sind, sind der Platz bzw. die Möglichkeiten für die Antriebe der verstellbaren Klemmbacken 5 und Auswerfer 10 extrem eingeengt. Dies führt dazu, dass diese Antriebskomponenten individuell für die Dichtungsprofil-Aufnahmevorrichtung 1 konstruiert bzw. entwickelt werden müssen.

Die benötigten Verstellbewegungen werden in vorteilhafter Weise mittels erfindungsgemäßer Antriebseinheiten 6 verwirklicht, die vorzugsweise als Antrieb jeweils einen pneumatischen oder hydraulischen Hub-Kolben-Zylinder 7 mit linear verstellbarer Kolbenstange 11 umfassen. Wie an einer Variante gemäß Figur 2 deutlich wird, weist die Antriebseinheit 6 gemäß der Erfindung eine mehrere Kettenglieder 16 umfassenden Kette 13 auf, die in einer vorteilhaften Führung 14 bzw. einem Führungselement mit einer Nut 22 geführt/angeordnet ist. Diese Kette 13 ist einerseits endseitig zur Kolbenstange 11 in vorteilhafter Weise mit einer linear verstellbaren, geführten Antriebsstange 12 verbunden. Andererseits ist die Kette 13 endseitig mit einem Schieber 15 bzw. einem sog. Abtriebselement verbunden. In Figur 2 ist ersichtlich, dass die Antriebsrichtung der Kolben- bzw. Antriebsstange 11, 12 winklig, d.h. im Wesentlichen senkrecht, zur Abtriebsrichtung bzw. Verstellrichtung des Schiebers 15 und somit auch des hier sehr schematisch dargestellten Klemmbacke 5 bzw. Auswerfer 10 ausgerichtet ist. Hierfür weist die Führung 14 bzw. die Nut 22 einen Bogen 28 auf, womit diese Umlenkung verwirklicht wird.

Da in vorteilhafter Weise der Hub-Kolben-Zylinder 7 doppelseitig mit Druck beaufschlagbar ist, kann der Schieber 15 mittels der in der Führung 14 geführten Kette 13 sowohl mit einer Druckkraft als auch einer Zugkraft entsprechend den dargestellten Doppelpfeilen verstellt werden. Es ist jedoch auch eine Variante mit nur einseitig beaufschalgbarem Hub-Kolben-Zylinder 7 möglich, wobei z.B. die Schwerkraft oder eine Federkraft die Rückstellung bzw. die Zugkraft generiert.

Alternativ zur in Figur 2 dargestellten Variante ist z.B. ohne großen konstruktiven Aufwand auch eine zweite Variante realisierbar, wobei der Schieber 15 und die Klemmbacke 5 bzw. der Auswerfer 10 nicht oben an der Führung 14 angeordnet ist bzw. übersteht, sondern unten angeordnet ist, wobei die Nut 22 sowie der Antrieb, d.h. die Komponenten 7, 11, 12, unverändert bleiben. Diese sehr kleiner konstruktive Änderung der Antriebseinheit 6 führt jedoch zu einer Umkehrung der Verstellung bzw. zu einer um 180° verdrehte Abtriebsrichtung des Schiebers 15 und somit der Verstellung des Abtriebs. Gegebenenfalls kann durch Austausch des (handelsüblichen) Hub-Kolben-Zylinders 7 bzw. der Kolbenstange 11 ein unterschiedlich langer Verstellweg realisiert werden. Dies verdeutlicht bereits die große Flexibilität der erfindungsgemäßen Antriebseinheit 6. So können viele (wesentliche) Komponenten ganz oder nahezu ganz unverändert für unterschiedlichste bzw. individuelle Varianten übernommen und somit der Antrieb standardisiert werden. Dies reduziert den konstruktiven und auch den wirtschaftlichen Aufwand.

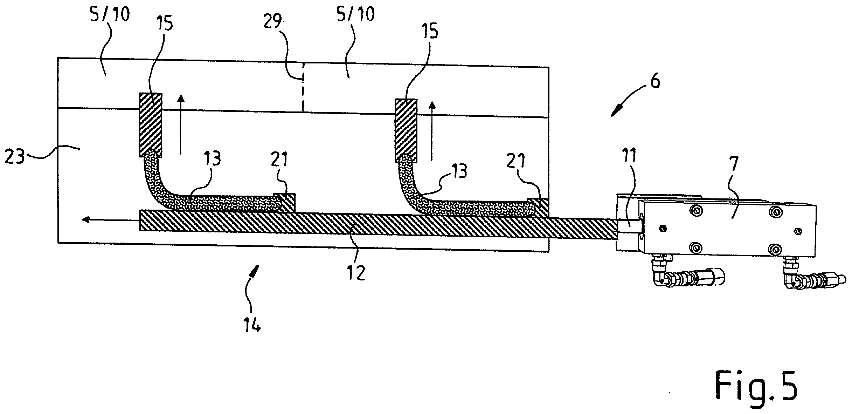

Die große Flexibilität der Antriebseinheit 6 gemäß der Erfindung wird auch durch die weiteren Varianten gemäß den Figuren 5 bis 8 veranschaulicht. So umfasst die Variante gemäß Figur 5 eine Antriebsstange 12, an der zugleich zwei Ketten 13 fixiert sind und diese sowie zwei Schieber 15 antreibt. Diese zwei Scheiber 15 können z.B. eine/einen vergleichsweise große Platte bzw. Klemmbacke 5 oder Auswerfer 10 antreiben bzw. (vertikal) hochheben. Dies verhindert ein nachteiliges Verkippen oder Verkanten der/des recht großen, schweren (Metall-)Platte bzw. Klemmbacke 5, Auswerfer 10 etc. Andererseits kann wie mittels der in der Platte bzw. Klemmbacke 5 oder dem Auswerfer 10 mittig schematisch angedeuteten, symbolischen Strichlinie 29 auch zwei unterschiedliche Platten bzw. Klemmbacken 5 oder Auswerfer 10 gleichzeitig/synchron verstellt bzw. angehoben werden.

Bei der weitern in Figur 6 dargestellten Variante werden mittels einer gemeinsamen Antriebsstange 12 nicht nur zwei Ketten 13 gemäß der Erfindung, sondern zudem auch noch zwei eine Schräge aufweisende Heber 30 angetrieben. Diese Heber 30 umfassen eine schiefe Ebene, die mit einem nicht näher dargestellten zweiten, eine korrespondierende Schräge aufweisendes Element in Wirkverbindung stehen und ein quer zur Blattebene ausgerichtetes (vertikales) Anheben einer Auswerfervorrichtung generieren.

Die in Figur 6 verwendeten Ketten 13 weisen eine Umlenkung von über 180° auf und die dargestellten Schieber 15 können entsprechend eine Schräge bzw. schiefe Ebene aufweisen und ebenfalls mit einem nicht näher dargestellten zweiten, eine korrespondierende Schräge aufweisendes Element in Wirkverbindung stehen und ein quer zur Blattebene ausgerichtetes (vertikales) Anheben der oder einer zweiten, separaten Auswerfervorrichtung generieren. Diese Variante zeigt u.a. auch die vorteilhafte Doppelnutzung von wesentlichen Komponenten der Antriebseinheit 6 gemäß der Erfindung und auch die Platz sparende Ausbildbarkeit von hier vier simultanen, separaten Verstellwegen/-komponenten.

Weiterhin ist der Figur 6 eine Variante einer weiteren Antriebseinheit 6 gemäß der Erfindung zu entnehmen, wobei die geführte Kette 13 eine Umlenkung um ca. 60° verwirklicht. Der Figur 6 ist somit auch zu entnehmen, dass in Bezug zur Anordnung bzw. Positionierung der Antriebseinheiten 6 bzw. des Hub-Kolben-Zylinders 7 oder der Kolbenstange 11 ohne großen Aufwand an die gegebenen (räumlichen) Rahmenbedingungen angepasst werden können.

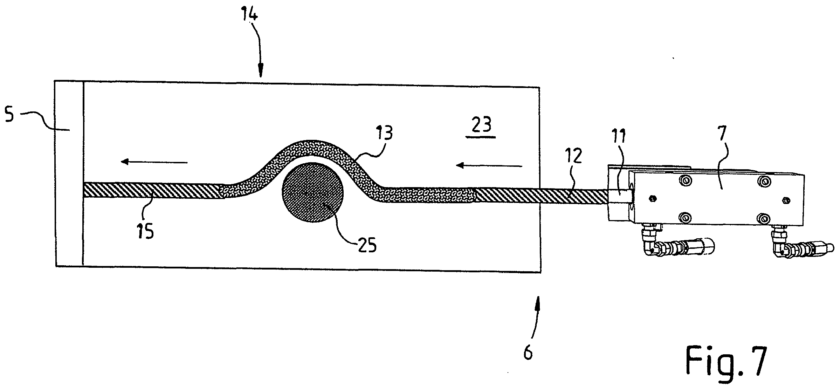

Figur 7 veranschaulicht eine weitere Variante, wobei die Kette 13 um ein Hindernis 25, z.B. eine Versorgungsleitung, eine Welle, eine Kanaldruchführung oder dergleichen, herumgeführt wird. Hierfür ist lediglich eine entsprechend ausgebildete Führung 14 bzw. Nut 22 des Führungselementes 23 vorzusehen. Die anderen, wesentlichen Komponenten können wiederum unverändert eingesetzt werden.

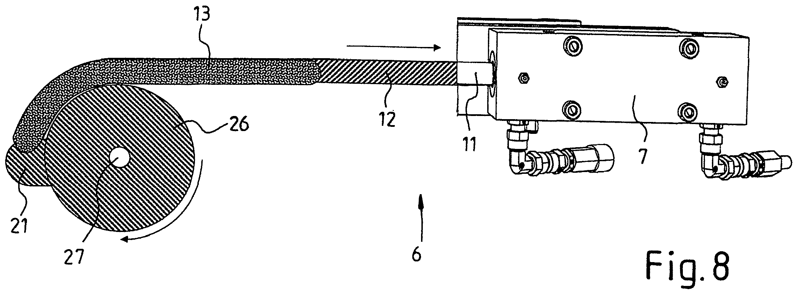

Figur 8 zeigt eine weitere Variante, wobei die Kette 13 ein um eine Achse 27 drehbares Rad 26 antreibt bzw. verstellt. Hiermit kann die Linearbewegung der Kolbenstange 11 in eine Rotation des Rades 26 umgewandelt werden, womit z.B. eine Drehbewegung eines Klemmbackens 5, eines Gussformelementes oder dergleichen generiert werden kann. Hierbei können wiederum wesentliche Komponenten der Antriebseinheit 6 unverändert übernommen werden.

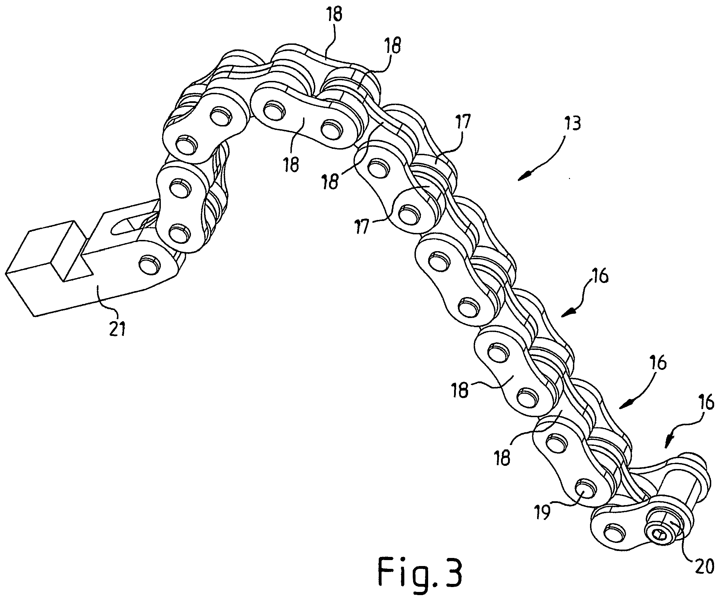

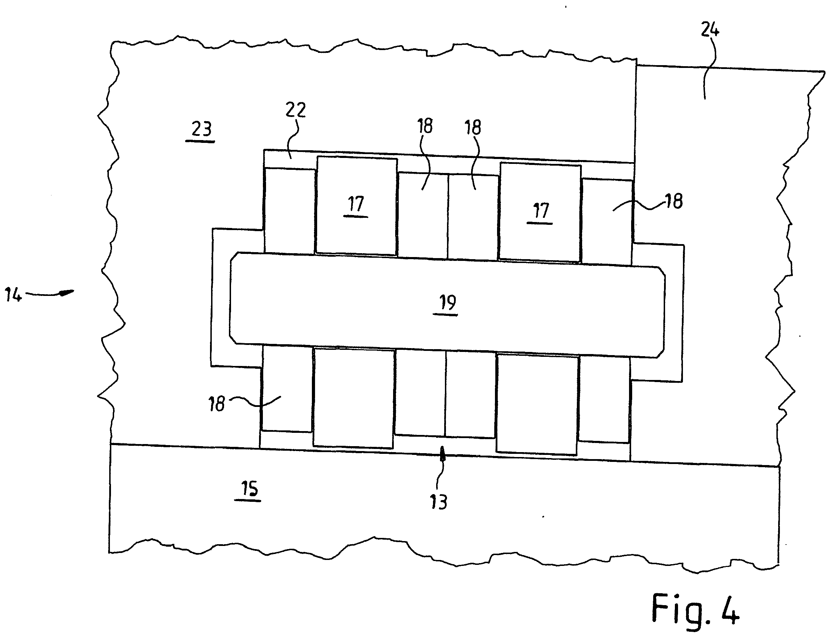

In den Figuren 3 und 4 ist die Kette 13 detaillierter dargestellt. Die Kette 13 bzw. die Kettenglieder 16 umfassen in vorteilhafter Weise Laschen 18, die mittels Achsen 19 miteinander verbunden sind. Zwischen den Laschen sind Rollen 17 vorgesehen, die umfangseitig Laufflächen aufweisen, die wiederum auf Führungsflächen der Nut 22 bzw. der Führung 14 laufen/rollen.

Vorzugsweise sind die Durchmesser der Rollen 17 größer als die Höhe der Laschen, so dass ausschließlich die Rollen 17 von der Führung 14 bzw. Nut 22 geführt werden. Die Rollen 17 und/oder die Führung 14 bzw. Nut 22 kann eine (Oberflächen-) Härtung aufweisen, so dass die Lebensdauer erhöht wird und/oder eine Schmierung minimiert werden kann.

Zudem sind in vorteilhafter Weise längs der Achsen 19 zwei Rollen 17 vorgesehen/angeordnet, was ein Verkippen/Verkanten wirkungsvoll verhindert. Dies ist sowohl bzgl. Abrieb und Verschleiß als auch bzgl. Leichtgängigkeit der Kette 13 in der Führung 14, insb. im Bogen 28 von großem Vorteil.

In der Schnittdarstellung gemäß Figur 4 wird zudem deutlich, dass die Nut 22 bzw. das Führungselement 23 mittels einem Abdeckelement 24 und/oder dem Schieber 15 verschlossen bzw. zu einer geschlossenen, vollumfänglichen Führung 14 ausgebildet wird. Auch wird hierbei deutlich, dass die Nut 22 bzw. die Führung 14 ein gewisses Spiel aufweist, insb. seitlich längs der Achse 19, um u.a. die Reibung zu reduzieren.

Zur Anbindung bzw. Verbindung der Kette 13 einerseits mit der Antriebsstange 12 und anderseits mit dem Schieber 15 sind in vorteilhafter Weise eine Schraube 20 und ein Endstück 21 vorgesehen, kann aber auch z.B. durch eine Achse erfolgen.

### Bezugszeichenliste

- 1: Aufnahmevorrichtung
- 2: Profil
- 3: Profil
- 4: Verbindung
- 5: Klemmbacke
- 6: Antriebseinheit
- 7: Hub-Kolben-Zylinder
- 8: Klemmbacke
- 9: Stütze
- 10: Auswerfer
- 11: Kolbenstange
- 12: Antriebsstange
- 13: Kette
- 14: Führung
- 15: Schieber
- 16: Kettenglied
- 17: Rolle
- 18: Lasche
- 19: Achse
- 20: Schraube
- 21: Endstück
- 22: Nut
- 23: Führungselement
- 24: Abdeckelement
- 25: Hindernis
- 26: Rad
- 27: Achse
- 28: Bogen
- 29: Strichlinie
- 30: Heber

## Patentansprüche

1. Dichtungsprofil-Aufnahmevorrichtung (1) mit wenigstens einer ersten Halteeinheit zum Aufnehmen und Halten eines ersten Dichtungsprofilelementes (2) und mit einer zweiten Halteeinheit zum Aufnehmen und Halten eines zweiten Dichtungsprofilelementes (3) sowie mit wenigstens einer Gießeinheit zum Gießen von wenigstens einem Verbindungsabschnitt (4) zum Verbinden des ersten Dichtungsprofilelementes (2) mit dem zweiten Dichtungsprofilelement (3) und/oder zum Gießen von einem ersten Endabschluss des ersten Dichtungsprofilelementes (2) und einem zweiten Endabschluss des zweiten Dichtungsprofilelementes (3), wobei die erste Halteeinheit wenigstens ein erstes Halteelement (8) und ein zweites, relativ zum ersten Halteelement (8) verstellbares Halteelement (5) und die zweite Halteeinheit wenigstens ein drittes Halteelement (8) und ein viertes, relativ zum dritten Halteelement (8) verstellbares Halteelement (5) umfasst, wobei wenigstens eine wenigstens teilweise verstellbare Auswerfereinheit (10) zum Auswerfen wenigstens des ersten und/oder zweiten Dichtungsprofilelementes (2, 3) vorgesehen ist, wobei wenigstens eine erste Antriebseinheit (6) zum Verstellen des zweiten Halteelementes (5) und eine zweite Antriebseinheit (6) zum Verstellen des vierten Halteelementes (5) sowie eine dritte Antriebseinheit (6) zum wenigstens teilweisen Verstellen der Auswerfereinheit (10) vorgesehen sind, wobei insbesondere eine Heizeinheit und/oder Kühleinheit zum wenigstens teilweisen Heizen und/oder Kühlen der Aufnahmevorrichtung (1) vorgesehen ist, **dadurch gekennzeichnet, dass** die erste und/oder zweite und/oder dritte Antriebseinheit (6) wenigstens eine mehrere Kettenglieder (16) umfassende Kette (13) aufweist, wobei die Kette (13) und/oder Kettenglieder (16) wenigstens zwischen zwei Führungsflächen einer Führungseinheit (14) zum Führen der Kette (13) und/oder Kettenglieder (16) angeordnet ist, so dass mit der ersten und/oder zweiten und/oder dritten Antriebseinheit (6) sowohl in Zugrichtung als auch in Druckrichtung der Kette (13) eine Verstellkraft realisierbar ist.

2. Vorrichtung nach Anspruch 1, **dadurch gekennzeichnet, dass** die erste und/oder zweite und/oder dritte Antriebseinheit (6) wenigstens einen Linearantrieb (7) zum linearen Verstellen eines ersten Antriebselementes (12) umfasst.

3. Vorrichtung nach einem der vorgenannten Ansprüche, **dadurch gekennzeichnet, dass** der Linearantrieb (7) als Hub-Kolben-Zylindereinheit (7) ausgebildet ist.

4. Vorrichtung nach einem der vorgenannten Ansprüche, **dadurch gekennzeichnet, dass** die Kette (13) und/oder Kettenglieder (16) zwischen dem ersten Antriebselement (11, 12) und einem zweiten Antriebselement (15) angeordnet sind.

5. Vorrichtung nach einem der vorgenannten Ansprüche, **dadurch gekennzeichnet, dass** das erste Antriebselement (11, 12) in eine erste Verstellrichtung und das zweite Antriebselement (15) in eine zweite Verstellrichtung verstellbar ist, wobei die erste Verstellrichtung winklig, insbesondere senkrecht, zur zweiten Verstellrichtung ausgerichtet ist.

6. Vorrichtung nach einem der vorgenannten Ansprüche, **dadurch gekennzeichnet, dass** die Führungseinheit (14) wenigstens eine Führungsnut (14) und/oder Führungsausnehmung umfasst.

7. Vorrichtung nach einem der vorgenannten Ansprüche, **dadurch gekennzeichnet, dass** die Führungseinheit (14) wenigstens einen gebogenen und/oder runden Führungsabschnitt (28) zum Umlenken der Kette (13) und/oder Kettenglieder (16) umfasst.

8. Vorrichtung nach einem der vorgenannten Ansprüche, **dadurch gekennzeichnet, dass** die Führungseinheit (14) wenigstens ein um eine Drehachse (27) drehbares Umlenkrad (26) zum Umlenken der Kette (13) und/oder Kettenglieder (16) umfasst.

9. Vorrichtung nach einem der vorgenannten Ansprüche, **dadurch gekennzeichnet, dass** am ersten Antriebselement (11, 12) des Linearantriebs (7) wenigstens zwei Ketten (13) fixiert sind, so dass beim Verstellen des ersten Antriebselements (11, 12) zugleich die wenigstens zwei Ketten (13) verstellt werden.

10. Vorrichtung nach einem der vorgenannten Ansprüche, **dadurch gekennzeichnet, dass** die Kette (13) und/oder Kettenglieder (16) wenigstens Laufflächen umfassende Laufrollen (17) aufweisen, wobei die Laufflächen der Laufrollen (17) an den Führungsflächen der Führungseinheit (14) angeordnet sind.

11. Kunststoff-Spritzgussmaschine mit einer Kunststoff-Spritzgusseinheit zum Spritzgießen wenigstens eines Kunststoffes und mit einer Dichtungsprofil-Aufnahmevorrichtung (1) nach einem der vorgenannten Ansprüche.

## Claims

1. Sealing profile receiving device (1) having at least one first holding unit for receiving and holding a first sealing profile element (2) and having a second holding unit for receiving and holding a second sealing profile element (3), and having at least one casting unit for casting at least one connecting portion (4) for connecting the first sealing profile element (2) to the second sealing profile element (3) and/or for casting a first end termination of the first sealing profile element (2) and a second end termination of the second sealing profile element (3), wherein the first holding unit comprises at least one first holding element (8) and one second holding element (5) that is adjustable relative to the first holding element (8), and the second holding unit comprises at least one third holding element (8) and one fourth holding element (5) that is adjustable relative to the third holding element (8), wherein at least one at least partially adjustable ejector unit (10) for ejecting at least the first and/or second sealing profile element (2, 3) is provided, wherein at least one first drive unit (6) for adjusting the second holding element (5) and one second drive unit (6) for adjusting the fourth holding element (5), and also one third drive unit (6) for at least partially adjusting the ejector unit (10) are provided, wherein in particular a heating unit and/or cooling unit for at least partially heating and/or cooling the receiving device (1) is provided, **characterized in that** the first and/or second and/or third drive unit (6) has at least one chain (13) comprising a plurality of chain links (16), wherein the chain (13) and/or chain links (16) is/are arranged at least between two guide faces of a guide unit (14) for guiding the chain (13) and/or chain links (16), such that an adjusting force is able to be exerted both in the pulling direction and in the pushing direction of the chain (13) by way of the first and/or second and/or third drive unit (6).

2. Device according to Claim 1, **characterized in that** the first and/or second and/or third drive unit (6) comprises at least one linear drive (7) for linearly adjusting a first drive element (12).

3. Device according to either of the preceding claims, **characterized in that** the linear drive (7) is in the form of a reciprocating piston-cylinder unit (7).

4. Device according to one of the preceding claims, **characterized in that** the chain (13) and/or chain links (16) is/are arranged between the first drive element (11, 12) and a second drive element (15).

5. Device according to one of the preceding claims, **characterized in that** the first drive element (11, 12) is adjustable in a first adjusting direction and the second drive element (15) is adjustable in a second adjusting direction, wherein the first adjusting direction is oriented at an angle, in particular perpendicularly, to the second adjusting direction.

6. Device according to one of the preceding claims, **characterized in that** the guide unit (14) comprises at least one guide slot (14) and/or guide recess.

7. Device according to one of the preceding claims, **characterized in that** the guide unit (14) comprises at least one curved and/or round guide portion (28) for deflecting the chain (13) and/or chain links (16).

8. Device according to one of the preceding claims, **characterized in that** the guide unit (14) comprises at least one deflection wheel (26), which is rotatable about an axis of rotation (27), for deflecting the chain (13) and/or chain links (16).

9. Device according to one of the preceding claims, **characterized in that** at least two chains (13) are fixed to the first drive element (11, 12) of the linear drive (7), such that, when the first drive element (11, 12) is adjusted, the at least two chains (13) are adjusted at the same time.

10. Device according to one of the preceding claims, **characterized in that** the chain (13) and/or chain links (16) has/have at least rollers (17) comprising running surfaces, wherein the running surfaces of the rollers (17) are arranged on the guide faces of the guide unit (14) .

11. Plastic injection molding machine having a plastic injection molding unit for injection molding at least one plastic, and having a sealing profile receiving device (1) according to one of the preceding claims.

## Revendications

1. Dispositif de réception de profilé d'étanchéité (1) doté d'au moins une première unité de maintien servant à recevoir et maintenir un premier élément de profilé d'étanchéité (2) et d'au moins une deuxième unité de maintien servant à recevoir et maintenir un deuxième élément de profilé d'étanchéité (3) ainsi que d'au moins une unité de moulage pour le moulage d'au moins une partie de liaison (4) servant à la liaison du premier élément de profilé d'étanchéité (2) au deuxième élément de profilé d'étanchéité (3) et/ou servant au moulage d'une première terminaison du premier élément de profilé d'étanchéité (2) et d'une deuxième terminaison du deuxième élément de profilé d'étanchéité (3), dans lequel la première unité de maintien comporte au moins un premier élément de maintien (8) et un deuxième élément de maintien (5) déplaçable par rapport au premier élément de maintien (8) et la deuxième unité de maintien comporte au moins un troisième élément de maintien (8) et un quatrième élément de maintien (5) déplaçable par rapport au troisième élément de maintien (8), dans lequel au moins une unité d'éjection (10) au moins partiellement déplaçable servant à éjecter au moins le premier et/ou le deuxième élément de profilé d'étanchéité (2, 3) est prévue, dans lequel au moins une première unité d'entraînement (6) servant à déplacer le deuxième élément de maintien (5) et une deuxième unité d'entraînement (6) servant à déplacer le quatrième élément de maintien (5) ainsi qu'une troisième unité d'entraînement (6) servant à déplacer au moins partiellement l'unité d'éjection (10) sont prévues, dans lequel en particulier une unité de chauffage et/ou une unité de refroidissement servant à chauffer et/ou refroidir au moins partiellement le dispositif de réception (1) est/sont prévue(s), **caractérisé en ce que** la première et/ou la deuxième et/ou la troisième unité d'entraînement (6) comprend/comprennent au moins une chaîne (13) comportant plusieurs maillons de chaîne (16), la chaîne (13) et/ou les maillons de chaîne (16) étant disposé(e)(s) au moins entre deux surfaces de guidage d'une unité de guidage (14) servant au guidage de la chaîne (13) et/ou des maillons de chaîne (16), de sorte qu'une force de déplacement puisse être réalisée à la fois dans le sens de traction et dans le sens de compression de la chaîne (13) à l'aide de la première et/ou de la deuxième et/ou de la troisième unité d'entraînement (6).

2. Dispositif selon la revendication 1, **caractérisé en ce que** la première et/ou la deuxième et/ou la troisième unité d'entraînement (6) comporte(nt) au moins un entraînement linéaire (7) servant au déplacement linéaire d'un premier élément d'entraînement (12).

3. Dispositif selon l'une des revendications précédentes, **caractérisé en ce que** l'entraînement linéaire (7) est réalisé sous forme d'unité piston-cylindre alternative (7).

4. Dispositif selon l'une des revendications précédentes, **caractérisé en ce que** la chaîne (13) et/ou les maillons de chaîne (16) est/sont disposé(e)(s) entre le premier élément d'entraînement (11, 12) et un deuxième élément d'entraînement (15).

5. Dispositif selon l'une des revendications précédentes, **caractérisé en ce que** le premier élément d'entraînement (11, 12) est déplaçable dans une première direction de déplacement et le deuxième élément d'entraînement (15) est déplaçable dans une deuxième direction de déplacement, la première direction de déplacement étant orientée de manière angulaire, en particulier perpendiculairement, par rapport à la deuxième direction de déplacement.

6. Dispositif selon l'une des revendications précédentes, **caractérisé en ce que** l'unité de guidage (14) comporte au moins une rainure de guidage (14) et/ou un évidement de guidage.

7. Dispositif selon l'une des revendications précédentes, **caractérisé en ce que** l'unité de guidage (14) comporte au moins une partie de guidage (28) courbe et/ou circulaire servant à la déviation de la chaîne (13) et/ou des maillons de chaîne (16).

8. Dispositif selon l'une des revendications précédentes, **caractérisé en ce que** l'unité de guidage (14) comporte au moins une roue de déviation (26) pouvant tourner autour d'un axe de rotation (27) et servant à la déviation de la chaîne (13) et/ou des maillons de chaîne (16) .

9. Dispositif selon l'une des revendications précédentes, **caractérisé en ce qu'**au moins deux chaînes (13) sont fixées au premier élément d'entraînement (11, 12) de l'entraînement linéaire (7), de sorte que les au moins deux chaînes (13) soient déplacées en même temps lors du déplacement du premier élément d'entraînement (11, 12) .

10. Dispositif selon l'une des revendications précédentes, **caractérisé en ce que** la chaîne (13) et/ou les maillons de chaîne (16) comporte (nt) des rouleaux (17) comportant au moins des surfaces de contact, les surfaces de contact des rouleaux (17) étant disposées sur les surfaces de guidage de l'unité de guidage (14).

11. Machine de moulage par injection de matière synthétique comportant une unité de moulage par injection de matière synthétique servant au moulage par injection d'au moins une matière synthétique et comportant un dispositif de réception de profilé d'étanchéité (1) selon l'une des revendications précédentes.
